# DEMANDE DE BREVET EUROPEEN

(11) **EP 4 183 702 A1**
(43) Date de publication de la demande: **24.05.2023**
(21) Numéro de dépôt: 22202194.1
(22) Date de dépôt: 18.10.2022
(51) Int. Cl.: B65B 29/02, B65B 7/28, B65B 51/10, B65B 41/06, B65B 43/10, B29C 65/54, B29C 65/00, B65D 85/816

(54) **PROCÉDÉ DE DÉPÔT D'UN OPERCULE DANS UN GOBELET**

(30) Priorité: 18.11.2021 FR 2112188
(71) Demandeur: Automatique Distribution : Audis, 76370 Martin-Eglise (FR)
(72) Inventeur: BODDAERT, Bertrand, 59190 Morbecque (FR)
(74) Mandataire: Ipsilon

(57) **Abrégé**

L'invention se rapporte à un procédé de dépôt d'un opercule (1) dans un gobelet (2) dans le but de créer un compartiment fermé au fond dudit gobelet (2) dans lequel est logée une poudre destinée à la préparation d'une boisson, ledit opercule (1) possédant un corps (3) de forme circulaire et une languette (4) prolongeant radialement ledit corps (3).

Selon l'invention le procédé comprend :
-une étape de placement du corps circulaire (3) de l'opercule (1) sur un support (9),
-une étape d'insertion dans le support (9) d'un formeur (14) cylindrique, de manière à créer sur l'opercule (1) un bord relevé (22),
-une étape de dépôt de l'opercule (1) dans le gobelet (3), dans une position pour laquelle le corps circulaire (3) s'étend parallèlement à un fond (5) du gobelet (2), et le bord relevé (22) vient en appui sur toute sa longueur contre une surface interne (30) dudit gobelet (2),
-une étape de soudure de l'opercule (1) dans le gobelet (2).

## Description

La présente invention se rapporte à un procédé de dépôt d'un opercule dans un gobelet.

Généralement, des boissons telles que par exemple du café ou du lait sont placées au fond de gobelets sous forme de poudres, avant qu'un liquide pouvant être chaud ou froid soit versé dans lesdits gobelets pour obtenir la boisson désirée. En effet, la poudre se mélange alors à ce liquide, qui peut par exemple être de l'eau, pour obtenir une boisson homogène. Afin d'améliorer les conditions de stockage de ces poudres dans les gobelets, un opercule est déposé dans le gobelet, juste au-dessus de la poudre, pour isoler la poudre du reste du gobelet. L'opercule a pour but de créer un espace clos au fond du gobelet, en empêchant d'avoir directement accès à la poudre. Cet opercule empêche la poudre de s'échapper par inadvertance du gobelet et l'empêche également d'être polluée par des particules extérieures au gobelet. Un particulier désireux de consommer une boisson, retire d'abord l'opercule du gobelet avant de verser un liquide dans le gobelet dans le but d'obtenir sa boisson.

Il est donc important que l'opercule puisse être déposé efficacement dans le gobelet, de façon à créer un compartiment étanche au fond de celui-ci dans lequel sera logée la poudre. Il est également important que ce dépôt puisse être réalisé facilement, rapidement et avec une bonne répétitivité.

Un procédé selon l'invention permet de déposer un opercule dans un gobelet, de façon à créer un compartiment dans lequel sera logée la poudre, en répondant à toutes les exigences ci-avant.

L'invention a pour objet un procédé de dépôt d'un opercule dans un gobelet pour créer un compartiment fermé au fond dudit gobelet dans lequel sera logée une poudre destinée à la préparation d'une boisson, ledit opercule possédant un corps de forme circulaire et une languette prolongeant radialement ledit corps.

Selon l'invention, le procédé comprend les étapes suivantes :
- une étape de placement du corps circulaire de l'opercule sur un support comprenant une excroissance centrale entourée par une bande annulaire périphérique, ladite excroissance centrale et ladite bande annulaire étant concentriques et délimitant une gorge annulaire,
- une étape d'insertion dans le support d'un formeur cylindrique possédant une extrémité annulaire, de sorte que ladite extrémité annulaire vienne se loger dans la gorge annulaire du support, cette insertion provoquant une pliure périphérique du corps circulaire de l'opercule créant un bord relevé qui est en appui contre une surface externe de cette extrémité annulaire,
- une étape de dépôt de l'opercule dans le gobelet, dans une position pour laquelle le corps circulaire s'étend parallèlement à un fond du gobelet, et le bord relevé vient en appui sur toute sa longueur contre une surface interne dudit gobelet,
- une étape de soudure de l'opercule dans le gobelet.

Le principe d'un procédé selon l'invention est de créer à la périphérie du corps circulaire de l'opercule, un bord relevé s'étendant sur 360°. Préférentiellement, le corps circulaire de l'opercule s'étend dans un plan et le bord relevé s'étend perpendiculairement audit corps circulaire. Ce bord relevé constitue une bande fermée qui est assimilable à une couronne. La création de ce bord relevé est réalisée au moyen d'un emboitement de deux pièces l'une dans l'autre, à savoir le formeur dans le support. Le coulissement relatif entre le support et le formeur pour réaliser cet emboitement, s'effectue selon une direction qui est perpendiculaire au plan du corps circulaire de l'opercule. Cet emboitement entraine une pliure périphérique du corps circulaire, créant un bord relevé qui vient se loger entre une surface interne de la bande annulaire du support et une surface externe du formeur. L'opercule est fin et est réalisé dans un matériau facilement déformable tel que par exemple de l'aluminium. Une fois que l'opercule a été formé avec la création de ce bord périphérique relevé, il est placé dans un gobelet jusqu'à ce que ledit bord périphérique relevé vienne au contact sur la totalité de sa circonférence, d'une surface interne du gobelet. Il est alors soudé au gobelet au moyen d'une tête de soudure introduite dans le gobelet et diffusant de la chaleur vers le bord périphérique relevé de l'opercule, afin de souder celui-ci à une surface interne dudit gobelet. Il est à noter que la création du bord périphérique relevé de l'opercule est réalisée au moyen d'un coulissement du formeur dans le support qui est fixe, ou au moyen d'un coulissement du support le long du formeur qui est fixe. Avantageusement, lors de ce procédé, la languette est placée dans le gobelet de sorte qu'elle vienne en appui contre une surface interne du gobelet en s'étendant depuis le corps circulaire de l'opercule jusqu'à au moins un bord annulaire du gobelet matérialisant l'ouverture dudit gobelet.

Selon une caractéristique possible de l'invention, l'étape de placement du corps circulaire de l'opercule sur le support est réalisée en alignant le centre du corps circulaire sur le centre de l'excroissance. Cette étape est déterminante pour obtenir un bord périphérique relevé de l'opercule, qui soit homogène c'est-à-dire avec une largeur constante sur toute sa circonférence. En effet, le coulissement relatif entre le support et le formeur est réalisé alors que les axes de révolution de ces deux éléments sont confondus.

Selon une caractéristique possible de l'invention, l'étape de placement du corps circulaire sur le support est facilitée par une ventouse située sur l'excroissance. Une fois que le corps circulaire de l'opercule a été placé sur le support, il est important qu'il conserve sa position sur ledit support durant le coulissement du formeur. Cette ventouse aide à stabiliser la position du corps circulaire de l'opercule sur le support.

Selon une caractéristique possible de l'invention, le support est choisi de manière à ce que le diamètre interne de la bande annulaire périphérique soit inférieur au diamètre du corps circulaire de l'opercule. De cette manière, le corps circulaire de l'opercule déborde de la gorge annulaire du support, permettant ainsi la création possible d'un bord périphérique relevé sur le corps circulaire de l'opercule.

Selon une caractéristique possible de l'invention, la surface externe de l'extrémité annulaire du formeur contre laquelle est en appui le bord relevé du corps circulaire de l'opercule, possède une forme conique de manière à imprimer audit bord relevé une forme conique. En effet, un gobelet possède généralement une paroi latérale qui n'est pas rigoureusement cylindrique, mais est légèrement conique. De cette manière, en utilisant un tel formeur, le bord périphérique relevé du corps circulaire de l'opercule va adopter un profil légèrement conique, qui permettra audit bord relevé de créer un contact surfacique optimisé avec une surface interne dudit gobelet.

Selon une caractéristique possible de l'invention, l'extrémité annulaire du formeur possède une ventouse interne, destiné à maintenir l'opercule doté du bord relevé contre ledit formeur. Une fois que le bord périphérique relevé de l'opercule a été formé, le formeur et le support sont séparés l'un de l'autre, et grâce à la présence de cette ventouse dans le formeur, l'opercule demeure solidarisé audit formeur.

Selon une caractéristique possible de l'invention, le procédé comprend une étape d'insertion de l'opercule possédant le bord relevé dans le gobelet avant l'étape de dépôt de l'opercule dans le gobelet, ladite insertion étant réalisée alors que l'opercule est encore solidarisé au formeur, au moyen d'une translation dudit formeur dans ledit gobelet jusqu'à ce que le bord relevé vienne au contact de la surface interne dudit gobelet. Le formeur portant l'opercule doté de son bord périphérique relevé, coulisse dans le gobelet jusqu'à ce que ledit bord relevé vienne en contact avec une surface interne du gobelet. Le formeur continue d'être enfoncé dans le gobelet avec un certain effort, jusqu'à ce que le bord périphérique relevé adhère à la surface interne de la paroi latérale du gobelet.

Selon une caractéristique possible de l'invention, le procédé comprend une étape de retrait du formeur une fois que l'opercule est en contact avec la surface interne du gobelet. Une fois que l'opercule a été correctement positionné dans le gobelet, le formeur est retiré laissant ledit opercule dans ledit gobelet dans sa position définitive.

Selon une caractéristique possible de l'invention, l'étape de soudure est effectuée au moyen d'une tête de soudure pénétrant dans le gobelet jusqu'à atteindre l'opercule, la tête de soudure étant configurée pour diffuser de la chaleur sur les côtés en direction du bord relevé de l'opercule qui est placé contre la surface interne du gobelet. Cette tête de soudure particulière permet de souder le bord périphérique relevé de l'opercule contre une surface interne de la paroi latérale du gobelet.

L'invention a pour autre objet un gobelet réalisé au moyen d'un procédé selon l'invention, ledit gobelet possédant un fond et une paroi latérale conique.

Selon l'invention, le gobelet comprend un opercule possédant un corps circulaire placé au-dessus du fond en étant parallèle à celui-ci, ledit corps circulaire comprenant un bord relevé périphérique établissant un contact surfacique étendu avec une surface interne de la paroi latérale conique en créant un épaulement. La particularité de ce gobelet est qu'il comprend un opercule possédant un bord périphérique relevé, ledit bord relevé étant assimilable à une couronne fermée. Ce bord est constitué par une bande de matière de faible épaisseur, qui est en contact sur toute sa longueur avec une surface interne d'une paroi latérale dudit gobelet. Autrement dit, ce bord relevé est plaqué en continu contre ladite surface interne, sans laisser subsister avec celle-ci le moindre passage ou le moindre jeu. Ce bord relevé, qui est assimilable à une couronne fermée, créé donc avec ladite surface interne un épaulement sur 360°.

Un procédé selon l'invention présente l'avantage de permettre le dépôt d'un opercule parfaitement opérationnel dans un gobelet, avec une géométrie particulièrement adaptée à la forme dudit verre. Il a de plus l'avantage d'être sûr, fiable et reproductif, permettant de traiter de façon automatisée plusieurs gobelets les uns à la suite des autres.

On donne ci-après une description détaillée d'un mode de réalisation préféré d'un procédé selon l'invention, en se référant aux figures suivantes :
[Fig.1] représente une vue de face d'un opercule destiné à être fixé dans un gobelet au moyen d'un procédé de dépôt selon l'invention,
[Fig.2] représente une vue en perspective d'un support pour la réalisation d'un procédé de dépôt selon l'invention,
[Fig.3] représente une vue en perspective d'une mise en contact de l'opercule de la [Fig.1] avec le support de la [Fig.2],
[Fig.4] représente une vue en perspective d'un formeur pour la réalisation d'un procédé de dépôt selon l'invention,
[Fig.5] représente une vue en perspective sous un autre angle du formeur de la [Fig.4],
[Fig.6] représente une vue en perspective d'un ensemble constitué par l'opercule, le support et le formeur, le formeur n'étant pas encore emboité dans le support,
[Fig.7] représente une vue en perspective de l'ensemble de la [Fig.6], le formeur étant emboité dans le support,
[Fig.8] représente une vue en perspective du formeur des figures 4 et 5, portant un opercule formé,
[Fig.9] représente une vue en perspective du formeur de la [Fig.8] et d'un gobelet, ledit formeur étant en phase d'introduction dans ledit gobelet,
[Fig.10] représente une vue en perspective du formeur de la [Fig.8] et d'un gobelet, ledit formeur étant rentré dans ledit gobelet pour déposer l'opercule,
[Fig.11] représente une vue schématique en coupe d'un gobelet portant un opercule, et d'une tête de soudure placée dans ledit gobelet,
[Fig.12] représente une vue en perspective de l'intérieur d'un gobelet élaboré au moyen d'un procédé selon l'invention.

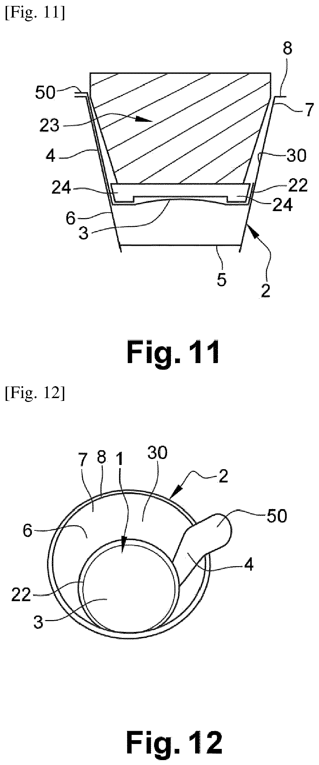

En se référant à la [Fig.12], l'invention se rapporte à un procédé de dépôt d'un opercule 1 dans un gobelet 2 préférentiellement réalisé à partir d'un papier enduit, pour rendre ledit gobelet 2 compostable et recyclable.

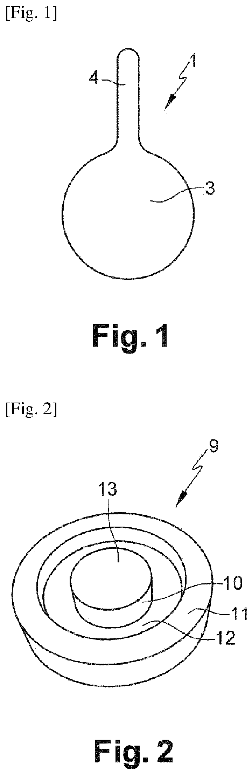

En se référant à la [Fig.1], l'opercule 1 qui est préférentiellement réalisé en aluminium, comprend un corps circulaire 3 et une languette 4 rectiligne prolongeant radialement ledit corps circulaire 3. L'opercule 1 est de très faible épaisseur, avantageusement de l'ordre de l'épaisseur d'une feuille de papier. Selon un mode de réalisation préféré de l'invention, le corps circulaire 3 possède un diamètre sensiblement de 80mm, la languette 4 a une longueur sensiblement de 130mm et une largeur sensiblement de 17mm. Le terme « sensiblement » signifie à plus ou moins 2mm.

En se référant aux figures 11 et 12, le gobelet 2 comprend un fond 5 plan et une paroi latérale 6 de forme légèrement conique, ledit fond 5 plan obturant une extrémité de ladite paroi latérale 6. Ce gobelet 2 peut comporter un pied sous la forme d'une paroi annulaire, qui est placée sous ledit fond 5, de sorte que la paroi latérale 6 s'étende d'un côté du fond 5, et la paroi annulaire formant le pied s'étende de l'autre côté dudit fond 5. Une extrémité 7 de la paroi latérale 6 du gobelet 2, qui est opposée à celle correspondant au fond 5, est ouverte et est délimitée par une collerette annulaire 8 constituant un bourrelet par lequel un consommateur va tenir le gobelet 2. L'extrémité comportant le fond 5 et l'extrémité comportant la collerette 8 sont à considérer le long de l'axe de révolution de la paroi latérale 6 du gobelet 2.

Selon une variante de réalisation, le gobelet 2 comprend un double fond composé de son fond habituel et d'une paroi supplémentaire placée à l'intérieur dudit gobelet 2 au-dessus dudit fond 5. Schématiquement, cette paroi supplémentaire comprend une partie principale circulaire, qui est placée sur le fond 5, et un bord relevé prolongeant ladite partie principale à sa périphérie. Ce bord relevé est au contact d'une surface interne 30 du gobelet, sur toute sa longueur de manière à établir un contact surfacique avec ladite surface interne 30 sans laisser subsister avec celle-ci de passage ou de jeu. Ce bord relevé s'étend sur 360° et est assimilable à une couronne fermée.

Une fois fixé à l'intérieur du gobelet 2, l'opercule 1 définit un compartiment fermé comportant un fond correspondant au fond 5 du gobelet 2 et dans lequel aura été préalablement introduit une poudre. Pour obtenir la boisson désirée, il suffit de retirer l'opercule 1 puis de verser un liquide dans le gobelet 2, le mélange dudit liquide et de ladite poudre étant destiné à former une boisson prête à être consommée.

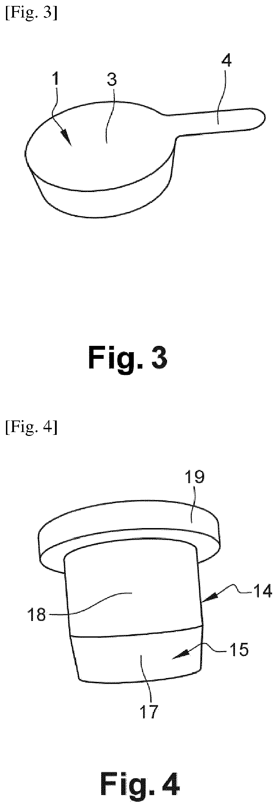

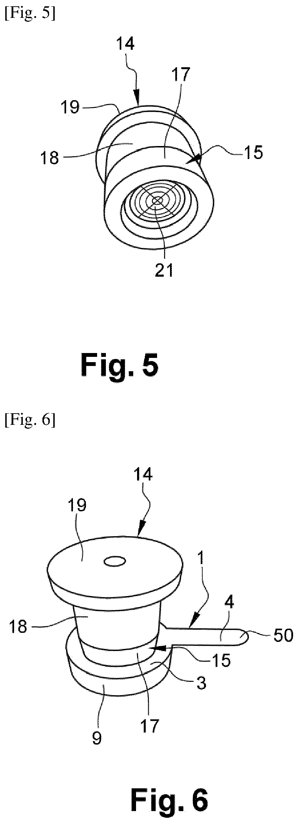

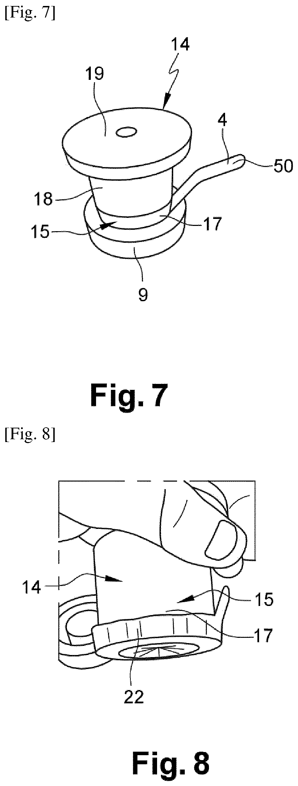

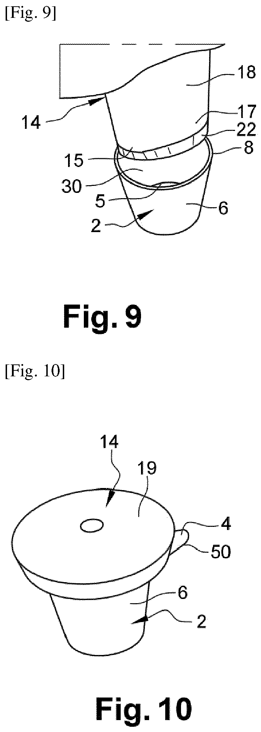

Un procédé selon l'invention comprend :
- 1- en se référant aux figures 2 et 3, une étape de placement du corps circulaire 3 de l'opercule 1 sur un support 9 comprenant une excroissance centrale cylindrique 10, entourée par une bande 11 annulaire périphérique, ladite excroissance centrale 10 et ladite bande annulaire 11 ménageant entre eux une gorge 12 annulaire. La gorge annulaire 12 possède un fond au niveau duquel prend naissance l'excroissance centrale 10, ladite excroissance 10 émergeant au-dessus de la bande annulaire 10 et se terminant par une ventouse 13. Autrement dit, la ventouse 13 constitue la partie la plus haute de l'excroissance centrale 10. Le placement du corps circulaire 3 de l'opercule 1 sur le support 9 est réalisé de manière à ce que le centre dudit corps circulaire 3 soit superposé au centre de l'excroissance centrale 10 comme cela est illustré à la [Fig.3]. La ventouse 13 permet d'assurer un contact étroit entre le corps circulaire 3 de l'opercule 1 et l'excroissance centrale 10 de manière à stabiliser la position de l'opercule 1 sur le support 9. L'excroissance centrale 10 et la bande annulaire 11 sont concentriques.
- 2- en se référant aux figures 4, 5, 6 et 7, une étape d'insertion dans le support 9 d'un formeur 14 cylindrique possédant une extrémité 15 annulaire, de sorte que ladite extrémité annulaire 15 vienne se loger dans la gorge annulaire 12 du support 9. Cette insertion provoque une pliure périphérique du corps circulaire 3 de l'opercule 1, créant un bord relevé 22 qui est en appui contre une surface externe 17 de cette extrémité annulaire 15. En se référant à la [Fig.4], le formeur 14 est une pièce solide présentant un corps cylindrique 18, dont une première extrémité se termine par une collerette cylindrique élargie 19 et dont une deuxième extrémité correspond à l'extrémité annulaire 15. La première extrémité et la deuxième extrémité sont à considérer le long de l'axe de révolution du corps cylindrique 18. La collerette élargie 19 va servir d'organe de préhension pour un utilisateur désireux de se saisir du formeur 14. La surface externe 17 de l'extrémité annulaire 15 du formeur 14 est légèrement conique, de sorte que le diamètre externe de ladite surface externe 17 diminue progressivement au fur et à mesure que l'on se rapproche de la partie distale de ladite extrémité annulaire 15. En se référant à la [Fig.5], une ventouse 21 est placée à l'intérieur de l'extrémité annulaire 15 du formeur 14. En se référant à la [Fig.6], une fois que le corps circulaire 3 de l'opercule 1 a été posée sur l'excroissance 10 centrale du support 9 dans une position centrale, le formeur 14 est amené au-dessus dudit support 9, de sorte que son extrémité annulaire 15 vienne au contact de l'opercule 1. En se référant à la [Fig.7], le formeur 14 est abaissé dans le support 9 de manière à faire coulisser verticalement l'extrémité annulaire 15 dudit formeur 14 dans la gorge annulaire 12 dudit support 9. Ce coulissement vertical vers le bas provoque une pliure périphérique du corps circulaire 3 de l'opercule 1, engendrant la formation d'un bord périphérique relevé 22. En effet, ce bord périphérique 22 se crée dans l'interstice situé entre une surface externe de l'extrémité annulaire 15 du formeur 14 et une surface interne de la bande annulaire 11 du support 9. Ce coulissement vertical permet également de solidariser l'opercule 1 au formeur 14, grâce à la ventouse 21 de l'extrémité annulaire 15 dudit formeur 14. Par conséquent, en se référant à la [Fig.8], un retrait du formeur 14 au moyen d'un coulissement vertical vers le haut, entraine un retrait de l'opercule 1 qui adhère à l'extrémité annulaire 15 dudit formeur 14 grâce à ladite ventouse 21. Il est à noter que le bord périphérique relevé 22 présente un profil légèrement conique puisqu'il est en contact avec une surface externe de l'extrémité annulaire 15 du formeur 14, qui est elle-même légèrement conique. Avec ce profil légèrement conique, le bord relevé 22 de l'opercule 1 va venir se placer idéalement contre une surface interne 30 du gobelet 2, dont la paroi latérale 6 est légèrement de forme conique. Le bord relevé 22 de l'opercule s'étend sur 360° et est assimilable à une couronne fermée de largeur sensiblement constante.
- 3- en se référant aux figures 9, 10 une étape d'introduction du formeur 14 muni de l'opercule 1 formé, dans un gobelet 2. Le terme « opercule formé » signifie que l'opercule 1 possède un bord périphérique relevé 22. Plus précisément, le formeur 14 est introduit dans le gobelet 2 par son extrémité annulaire 15, au bout de laquelle est placé l'opercule 1. Il est ensuite translaté dans ledit gobelet 2 vers le bas, jusqu'à ce que le bord périphérique relevé 22 de l'opercule 1 vienne en contact avec une surface interne 30 de la paroi latérale 6 dudit gobelet 2, comme cela est suggéré à la [Fig.10]. Une fois que ce contact a été établi, le formeur 14 continue d'être translaté vers le bas à l'intérieur du gobelet 2 avec un certain effort, pour déposer l'opercule 1 dans ledit gobelet 2.
- 4- une étape de retrait du formeur 14 après que l'opercule 1 ait été déposé dans le gobelet 2. Une fois que l'opercule 1 a été déposé dans le gobelet 2, le corps circulaire 3 de l'opercule 1 s'étend parallèlement au fond 5 de ce gobelet 2, tandis que le bord périphérique relevé 22 établit un contact surfacique étendu sur 360° avec la surface interne 30 de la paroi latérale 6 dudit gobelet 2, sans laisser subsister d'espace ou de jeu avec ladite surface interne 30.
- 5-en se référant à la [Fig.11], une étape de soudure de l'opercule 1 dans le gobelet 2 tel qu'il a été déposé au moyen du formeur 14. Cette étape de soudure est effectuée au moyen d'une tête 23 de soudure qui est insérée dans le gobelet 2 jusqu'à atteindre l'opercule 1. Cette tête de soudure 23 est configurée pour diffuser de la chaleur sur les côtés 24, en direction du bord périphérique relevé 22 de l'opercule 1 qui est placé contre une surface interne 30 de la paroi latérale 6 du gobelet 2.

Il est à préciser que l'opercule 1 est fixé dans le gobelet 2 au moyen d'un procédé selon l'invention, après que de la poudre ait été déposée sur le fond 5 dudit gobelet 2. Cette poudre, une fois qu'elle aura été mélangée à un liquide chaud ou froid, va constituer une boisson prête à être consommée. Cet opercule 1 créé un compartiment étanche au fond du gobelet 2, empêchant la poudre de s'échapper du gobelet 2 et préservant la poudre de toute pollution externe.

En se référant aux figures 11 et 12, lorsque l'opercule est déposé dans le gobelet 2, la languette 4 est au contact de la surface interne 30 de la paroi latérale 6 du gobelet 2 et s'étend à partir du corps circulaire 3 de l'opercule 1 jusqu'à la collerette annulaire 8 de ladite paroi latérale 6. Cette languette 8 se termine par un segment 50 qui est replié autour de ladite collerette annulaire 8. En exerçant une traction sur cette languette après avoir saisi le segment replié 50, un utilisateur va pouvoir retirer l'opercule 1 afin de pouvoir verser un liquide dans le gobelet 2.

## Revendications

1. Procédé de dépôt d'un opercule (1) dans un gobelet (2) pour créer un compartiment fermé au fond dudit gobelet (2) dans lequel est logée une poudre destinée à la préparation d'une boisson, ledit opercule (1) possédant un corps (3) de forme circulaire et une languette (4) prolongeant radialement ledit corps (3), **caractérisé en ce qu'**il comprend les étapes suivantes :
- une étape de placement du corps circulaire (3) de l'opercule (1) sur un support (9) comprenant une excroissance centrale (10) entourée par une bande annulaire (11) périphérique, ladite excroissance centrale (10) et ladite bande annulaire (11) étant concentriques et délimitant une gorge annulaire (12),
- une étape d'insertion dans le support (9) d'un formeur (14) cylindrique possédant une extrémité annulaire (15), de sorte que ladite extrémité annulaire (15) vienne se loger dans la gorge annulaire (12) du support (9), cette insertion provoquant une pliure périphérique du corps circulaire (3) de l'opercule (1) créant un bord relevé (22) qui est en appui contre une surface externe (17) de cette extrémité annulaire (15),
- une étape de dépôt de l'opercule (1) dans le gobelet (3), dans une position pour laquelle le corps circulaire (3) s'étend parallèlement à un fond (5) du gobelet (2), et le bord relevé (22) vient en appui sur toute sa longueur contre une surface interne (30) dudit gobelet (2),
- une étape de soudure de l'opercule (1) dans le gobelet (2).

2. Procédé de dépôt selon la revendication 1, **caractérisé en ce que** l'étape de placement du corps circulaire (3) de l'opercule (1) sur le support (9) est réalisée en alignant le centre du corps circulaire (3) sur le centre de l'excroissance (10).

3. Procédé de dépôt selon l'une quelconque des revendications 1 ou 2, **caractérisé en ce que** l'étape de placement du corps circulaire (3) sur le support (9) est facilitée par une ventouse (13) située sur l'excroissance (10).

4. Procédé de dépôt selon l'une quelconque des revendications 1 à 3, **caractérisé en ce que** le support (9) est choisi de manière à ce que le diamètre interne de la bande annulaire périphérique (11) soit inférieur au diamètre du corps circulaire (3) de l'opercule (1).

5. Procédé de dépôt selon l'une quelconque des revendications 1 à 4, **caractérisé en ce que** la surface externe (17) de l'extrémité annulaire (15) du formeur (14) contre laquelle est en appui le bord relevé (22) du corps circulaire (3) de l'opercule (1) possède une forme conique de manière à imprimer audit bord relevé (22) une forme conique.

6. Procédé de dépôt selon l'une quelconque des revendications 1 à 5, **caractérisé en ce que** l'extrémité annulaire (15) du formeur (14) possède une ventouse interne (21), destiné à maintenir l'opercule (1) doté du bord relevé (22) contre ledit formeur (14).

7. Procédé de dépôt selon l'une quelconque la revendication 6, **caractérisé en ce qu'**il comprend une étape d'insertion de l'opercule (1) possédant le bord relevé (22) dans le gobelet (2) avant l'étape de dépôt dudit opercule (1), et **en ce que** ladite insertion est réalisée alors que l'opercule (1) est encore solidarisé au formeur (14), au moyen d'une translation dudit formeur (14) dans ledit gobelet (2) jusqu'à ce que le bord relevé (22) vienne au contact de la surface interne (30) dudit gobelet (2).

8. Procédé de dépôt selon la revendication 7, **caractérisé en ce qu'**il comprend une étape de retrait du formeur (14) une fois que l'opercule (1) est en contact avec la surface interne (30) du gobelet (2).

9. Procédé de dépôt selon l'une quelconque des revendications 1 à 8, **caractérisé en ce que** l'étape de soudure est effectuée au moyen d'une tête de soudure (23) pénétrant dans le gobelet (2) jusqu'à atteindre l'opercule (1), et **en ce que** la tête de soudure (23) est configurée pour diffuser de la chaleur sur les côtés en direction du bord relevé (22) de l'opercule (1) qui est placé contre la surface interne (30) du gobelet (2).

10. Gobelet (2) réalisé au moyen d'un procédé selon l'une quelconque des revendications 1 à 9, ledit gobelet (2) possédant un fond (5) et une paroi latérale conique (6), **caractérisé en ce qu'**il comprend un opercule (1) possédant un corps circulaire (3) placée au-dessus du fond (5) en étant parallèle à celui-ci, et **en ce que** ledit corps circulaire (3) comprend un bord relevé périphérique (22), établissant un contact surfacique étendu avec une surface interne (30) de la paroi latérale conique (6) en créant un épaulement.
